Europäisches Patentamt

European Patent Office

Office européen des brevets

(11) Publication number: **0 308 874**
**A2**

# EUROPEAN PATENT APPLICATION

(21) Application number: 88115409.0

(22) Date of filing: 20.09.88

(51) Int. Cl.⁴: **B23C 5/10**

(30) Priority: 23.09.87 US 102064

(43) Date of publication of application:
29.03.89 Bulletin 89/13

(84) Designated Contracting States:
DE IT SE

(71) Applicant: **GTE VALENITE CORPORATION**
**750 Stephenson Highway P.O. Box 3950**
**Troy Michigan 48007-3950(US)**

(72) Inventor: **Stashko, Daniel R.**
**10600 Pine Hill Dr.**
**Holly, MI 48442(US)**

(74) Representative: **Patentanwälte Grünecker,**
**Kinkeldey, Stockmair & Partner**
**Maximilianstrasse 58**
**D-8000 München 22(DE)**

(54) **End mill cutting tool and indexable insert therefor.**

(57) An end mill tool having parallelogram-shaped inserts with two partially positive flanks separated by two vertical abutment flanks. Each of the inserts are mounted in a pocket seat with at least two flanks in abutment with compatible side wall surface. In operation, the flank surfaces facilitate enhanced tool life by absorbing the forces associated with cutting which would otherwise be transmitted to the retaining screw.

FIG.1

# END MILL CUTTING TOOL AND INDEXABLE INSERT THEREFOR

### Field of the Invention

This invention relates to an end mill cutting tool, and more particularly, to a plurality of indexable cutting inserts with a novel geometry which facilitates secured retention to the cutting tool.

### Background of the Invention:

An end mill is a cutting tool which includes a cylindrical body configuration having a shank portion and a cutting portion. The cutting portion contains a plurality of helically disposed teeth or on-edge cutting inserts extending from the shank end to an opposite free end of the tool, which, when rotated and brought into contact with a workpiece removes metal. One example of this is found in U.S. Patent No. 4,681,485, also assigned to GTE Valenite.

The insert sustains significant loading during the cutting operation and therefore requires that the insert fit snugly within the tool pocket in a manner which facilitates the distribution of the load to the tool body.

Several methods of fixing an insert in a tool pocket are known. For example, Ingersol Patent No. 4,182,587 discloses an end mill where generally parallelogram-shaped insert with partial positive relief angles on all four flanks are employed. When applied to a workpiece, however, the normal forces associated with cutting, load the cutting edge and thereby direct the insert rearward against the pocket walls. The insert thereby experiences both a horizontal force and a vertical component due in part to the angled surface of the pocket walls. The vertical component places the retainer screw in tension ultimately causing it to fail.

Accordingly, it is an object of the present invention to provide an end mill cutting tool with parallelogram-shaped inserts in which employs a pocket geometry wherein the forces imparted to the retaining screw during operation are minimized.

A further object is to provide an end mill cutting tool with parallelogram-shaped inserts in which the inserts are seated in respective pockets to provide a cutting edge having positive axial rake and zero radial rake angles.

A further object of the present invention is to provide an end mill cutting tool with indexable inserts in which the inserts provide a straight wall finished product.

A further object of the present invention is to provide an end mill cutting tool with indexable inserts in which the inserts provide for adequate heel clearance by the orientation of the pocket in the tool body.

### Summary of the Invention

Accordingly, in its broadest aspect, this invention relates to an end milling tool having a rotary body with an outer periphery. A number of slots are formed in the outer periphery which extend fully to the distal end of the body in an alternate manner. Each of these slots has a pocket shaped for receipt of a cutting insert. The pockets are arranged in staggered sequence along the slots and are machined for receipt of inserts of parallelogram or diamond shape. The parallelogram insert has both a top and underside face parallel to each other. Four flank sides intersect with the top face to form edges, two of which are for cutting and are parallel to each other and are oriented at an acute angle with respect to the top face. The remaining two edges formed by the two flank faces and the top surfaces form right angles with respect to the top face. Each parallelogram-shaped insert therefore has two partially positive flanks and two cutting edges formed from substantially planar surfaces.

One advantage of this embodiment is that loading of the cutting edge are not borne entirely by the retaining screw thereby enhancing tool life by minimizing screw failure due to fatigue.

Another advantage is that the abutting contact between the bottom face and side flats prevent loosening of the retaining screw due to the tangential force created by the cutting action of the insert.

Another advantage is that the flat abutment between the insert and the recess, especially the bottom face, prevents the collection of spent cutting chips thereby facilitating rapid removal of the inserts. The insert thus mounted results in an extremely strong mount for each insert and yet allows for accurate indexing to assure that a sharp edge is consistently presented to the workpiece.

The end mill can also be made with multiple, effective flutes or slots into which the chips can be driven and removed from, with the rows of cutting elements or inserts extending into adjacent flute areas being staggered vertically up the cutting area of the tool so that the tool can effect cutting faster and cover all the areas of the workpiece, efficiently.

## Brief Description of the Drawings

Further objects and advantages of the invention will become more apparent from the following description and claims, illustrated in the following drawings, wherein:

Figure 1 is a perspective view of the end mill cutter of the present invention;

Figure 2 is a side view in elevation of the end mill cutter of Figure 1;

Figure 3 is a bottom plan view of the end mill cutter of Figure 2;

Figure 4 is a cross-sectional view taken substantially along the plane indicated by line 4-4 of Figure 2;

Figure 5 is a cross-sectional view taken substantially along the plane indicated by line 5-5 of Figure 2;

Figure 6 is a perspective view of one of the indexable inserts used in the cutter of Figure 1;

Figure 7 is a top plan view of the insert of Figure 6;

Figure 8 is a front view in elevation of the insert of Figure 7;

Figure 9 is a cross-sectional view taken substantially along the plane indicated by line 12-12 of Figure 5 and showing an alternative form for mounting one of the inserts provided on the cutter;

Figure 10 is a side view in elevation of the insert mounted in Figure 9;

Figure 11 is a view similar to Figure 10 but with the insert mounted at a different axial tilt or attitude on the cutter body; and

Figure 12 is an enlarged view of an alternate form of the portion of the insert of Figure 6 indicated by circle 6-6 of Figure 6.

## Detailed Description of a Preferred Embodiment

Referring now to the drawings in detail, wherein like numerals indicate like elements throughout the several views and while some of the principles of the invention are applicable to various types of cutting tools, reference herein is made to an end mill cutter generally designated by the numeral 20.

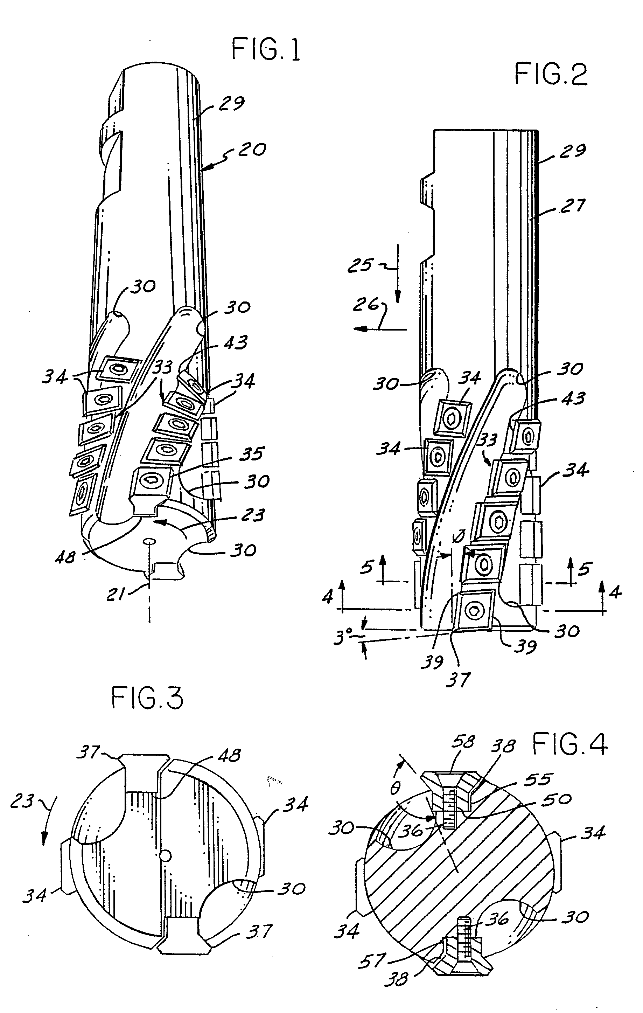

The end mill cutter 20 is rotatable about a central axis 21 in the direction of the arrow 23 (see Figures 1 and 3) and is adapted to be moved endwise or axially toward a workpiece (not shown) in the direction of the arrow 25 (see Figure 2) and then fed radially in the direction of the arrow 26 while rotating so as to remove metal from the workpiece. Specifically, the cutter 20 includes a cylindrical metal body 27 having a mounting shank 29 at its upper end and formed with four angularly spaced slots 30. Alternating zones of slots 30 open in the bottom end plane of the body 27 while the remaining slots have ends which are spaced upwardly from the end of the body 27. The cutter which has been illustrated is commonly referred to as a helical end mill in that each slot 30 extends helically along and around the axis 21 of the cutter 20.

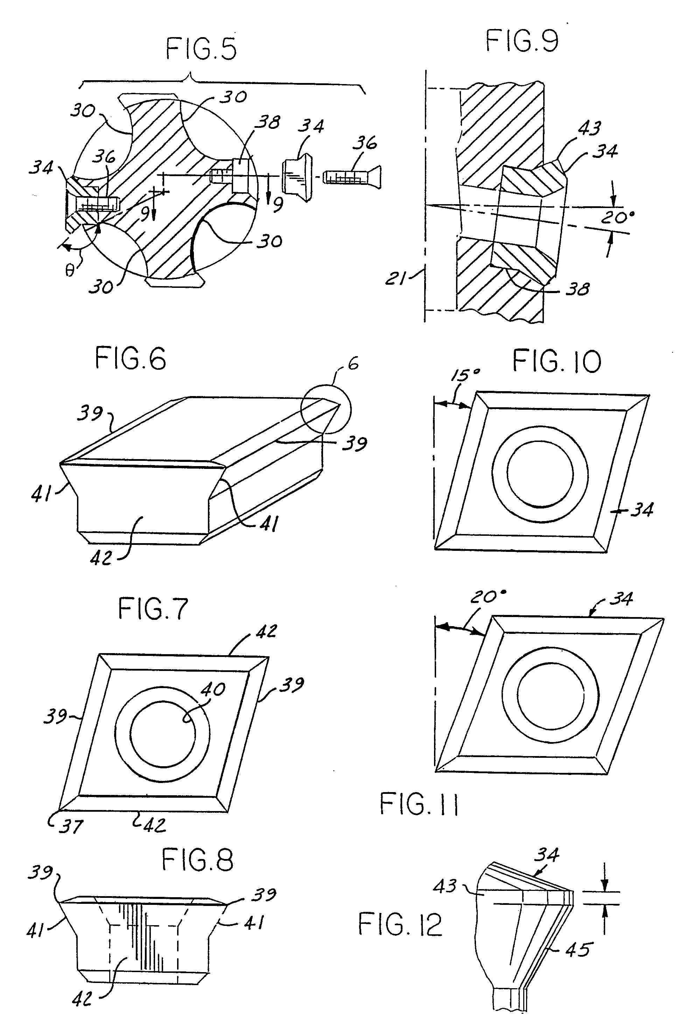

Disposed in the rear or inner end portion (in the direction of rotation) of each slot 30 is a row 33 of indexable cutting inserts. Each of the inserts in a row 33 is formed from a block of suitable cutting material such as tungsten carbide. Adjacent a helical slot 30 which opens in the end plane of body 27, the inserts include a series of parallelogram-shaped inserts 34 illustrated in detail in Figures 6 to 8, inclusive. The opposite edges of the insert 34 are parallel and flat as indicated at 39 to effect a smooth flat wall finish. The alternating rows 33 or series of inserts do not extend to the lower edge of the cutter body 27, and consist of a number of cutting inserts 34, preferable five, whose lowermost member is above the bottom edge or end plane of the cutter body 27 continuous to the end of each alternating helical slot 30, which is commonly referred to as a "flute."

The parallelogram insert 34 as illustrated in Figs. 6 to 8 has both a top and under side face both being planar and parallel to each other. An aperture transverses the insert thereby connecting the faces and is generally positioned centrally thereon. Two pair of oppositely oriented and parallel flank surfaces intersect with the top-side face and in doing so form the two before-mentioned oppositely opposed parallel cutting edges. The flank faces forming the cutting edges with respect to the top face each sweep out acute angles therefrom. The remaining two edges are formed from the intersection of the top and flank faces 42 which join to form right angles.

In one embodiment (see Figure 14), the parallelogram-shaped insert 34 is supported in a pocket 48 defined by slot 30 and includes a flat seat face 50 having a side wall surface 55 which intersects therewith about its periphery. At least one pair of flat indexing surfaces 57 are present in the side wall surface 55 oriented with sides parallel and normal to seat face 50. At least one side wall surface 55 opens out into the direction of cutting. Insert 34, when positioned in pocket 48, therefore, is fully supported.

In operation, the cutter 20 is rotated as described above in the direction of arrow 23. Upon striking the workpiece, the cutting edge of insert 34 transmits a load through the insert and against the backwall 55. Retainer screw 58 therefore experiences little, if any, vertical load thereby preserving the screw and ultimately the tool life.

When the insert 34 is located in its pocket 38, the cutting edge 39 which is disposed in active cutting position faces circumferentially about the circumference of cutter body 27 and is located at a positive axial rake angle as shown on Figure 2. Each of the inserts 34 is disposed at a zero or neutral axial rake angle as it cuts, but optionally, it can have its axis tilted as illustrated in Figure 9 from zero to 20˙ with respect to the longitudinal axis of the cutting body 21 so as to have an axial rake angle, when the inserts 34 are viewed in side elevation as illustrated in Figures 10 and 11. The tilt of the axis lowers the initial point of contact with the workpiece along the cutting edge so that a projection of the edge is no longer parallel to the longitudinal axis of the cutter body 27. For example, as shown in Figure 10 at a tilt of 5˙, the axial rake angle of the cutter insert 34 will be at 15˙. At a 7˙ tilt, the axial rake angle will be 20˙. The cutting action thus developed by each tilted, insert will result in a cutting action where the chips will now be driven up each flute or slot 30.

Figures 2 and 6-8 illustrates corner 37 extending downwardly below the bottom surface or end plane of the cutter body 27. The corner 37 extends downwardly beyond the end of the plane of the cutter body 27 at an angle of approximately 3˙ as illustrated most clearly in Figure 2 to provide a lead cutting edge for entering the metal material of the workplace.

By appropriately indexing and/or inverting the inserts 34, by loosening its respective screw 36, two cutting edges 39 may be brought into active cutting position as the insert can be rotated 180˙.

As shown in Figures 1 and 2, inserts 34 are disposed in each of the slots 30. The inserts in each slot are located in axially spaced, side-by-side relation and also are spaced circumferentially from one another. Because of the circumferential spacing, the inserts in each slot do not engage the workpiece simultaneously, but instead move into progressive engagement with the workpiece as the cutter 20 rotates.

Each of the inserts in adjacent slots are also staggered axially. Thus, the active cutting edge of the innermost insert 34 in each of the slots 30 axially spans the gap between one of the inserts in an adjacent slot. As a result of the staggered arrangement of the inserts in adjacent slots 30, the workpiece material which is left uncut between adjacent inserts of one slot 30 is wiped away or cut by the intervening insert in the following slot 30.

As shown on Figure 13, the cutting edge 43 of each circular insert 34 can be provided with a negative land or flat, as an option. This will serve to increase the strength of the cutting edge 43 although the benefits obtained from positive radial rake cutting will be forfeited.

It should also be understood that the tool 20 can be manufactured with different diameters; particularly, the geometry lends itself to the manufacture of small size diameter on the order of 1/2 to 1 inch.

The embodiments which have been described herein are but some of several which utilizes this invention and are set forth here by way of illustration but not of limitation. It is apparent that many other embodiments which may be rendered apparent to those skilled in the art may be made without departing materially from the spirit and scope of this invention.

**Claims**

1. An end mill cutter, comprising:
a rotary tool body having an outer periphery, said periphery having slots formed therein alternately extending fully to the distal end of said body,
each of said slots having a pocket positioned for receiving in staggered sequence therealong rotatable cutting inserts parallelogram in plan providing a plurality of indexable cutting edges in said slot,
said pocket includes a flat seating face and three abutment walls for abutting contact with said flank surface,
each insert comprising a top and underside face oriented parallel to each other, an aperture transversely said top and underside face for receipt of a retaining screw therethrough,
four flank sides each intersecting with said top face forming four edges, two of which being cutting edges parallel to each other and having acute included angles with respect to said top face,
said remaining two edges including substantially right angles with respect to said top and flank faces,
each insert is seated in said pocket thus enabling the forces encountered on the insert during operation to be transmitted to the pocket walls rather than to the retaining screw.

2. The inserts of claim 1 wherein said retaining screw threads into an aperture positioned on said pocket seat.

3. The insert of claim 1 wherein said top surface and pair of cutting edges is separated by at least one land area.

4. The parallelogram-shaped inserts of claim 1 wherein said cutting edges are formed from substantially planar surfaces.

5. The parallelogram-shaped insert of claim 4 wherein said planar surfaces are laterally disposed are from the others.

6. The end mill of claim 1 wherein said cutting edges extend below said cutter body underside face by approximately 3 degrees.

7. The end mill of claim 6 wherein said seating face forms an angle of between about 4 degrees to 8 degrees with respect to the plan passing through the rotational axis of the tool body.

8. An end mill cutter, comprising:

a rotary tool body having an outer periphery, said tool having slots formed in its outer periphery alternately extending fully to the distal end of said body,

each of said slots having a pocket positioned for receiving in staggered sequence therealong rotatable cutting inserts parallelogram in plan providing a plurality of indexable cutting edges in said slot,

each insert comprising a top and underside face oriented parallel to each other. An aperture traversing' said top and underside face for receipt of a retaining screw therethrough,

four flank sides each intersecting with said top face forming four cutting edges, two of which being parallel to each other and having acute included angles with respect to said top face,

said remaining two edges including substantially right angles with respect to said top and flank faces,

each insert is seated in said pocket thus enabling the forces encountered on the insert during operation to be transmitted to the pocket walls rather than to the retaining screw.

said insert cutting edge formed from substantially planar surfaces, and

said top surface and pair of cutting edges is separated by at least one land area.

FIG.1

FIG.2

FIG.3

FIG.4

FIG.5

FIG.9

FIG.6

FIG.10

FIG.7

FIG.8

FIG.11

FIG.12